# EUROPEAN PATENT APPLICATION

(11) **EP 4 726 850 A1**
(43) Date of publication of application: **15.04.2026**
(21) Application number: 25197984.5
(22) Date of filing: 25.08.2025
(51) Int. Cl.: H01M 10/42, H01M 50/105, H01M 50/572

(54) **PROTECTION CIRCUIT MODULE, BATTERY ASSEMBLY INCLUDING THE SAME, AND METHOD OF MANUFACTURING THE SAME**

(30) Priority: 14.10.2024 KR 20240139838
(71) Applicant: SAMSUNG SDI CO., LTD., Yongin-si, Gyeonggi-do 17084 (KR)
(72) Inventor: KANG, Myeonggyu, 17084 YONGIN-SI (KR)
(74) Representative: Regimbeau

(57) **Abstract**

A protection circuit module (210) of a battery assembly includes a substrate (220), a component mounted on the substrate (220), and a tab connection portion (240) spaced from the component on the substrate and to which an electrode tab (150) of a battery cell (100) is connected, wherein a first barrier (410) and a second barrier (420) are on the tab connection portion (240) and face each other.

## Description

### BACKGROUND

### 1. Field

The present disclosure relates to a protection circuit module, a battery assembly including the same, and a method for manufacturing the battery assembly.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The operational voltage range and battery capacity of secondary batteries may be determined depending on the positive electrode, negative electrode, and electrolyte. Charging and discharging significantly outside the allowable range may damage the battery, resulting in permanent functional impairment or even fire. A protection circuit module (PCM) may be a safety device that prevents the battery from igniting or exploding by short-circuiting the circuit to prevent further current flow in a case where the internal temperature of the battery rises to a high temperature or the voltage of the battery rises due to overcharging, etc. Through the PCM, the battery may be protected by blocking overcharge, overdischarge, overcurrent, etc. in advance during the use of electronic products with batteries mounted thereon.

The connection between the battery and the PCM may be made through the connection between the electrode tab of the battery and the tab connection portion of the PCM. However, during the battery manufacturing process, a short circuit may occur in the contact between the electrode tab of the battery and components of the PCM. In addition, because the separation distance between the component and the tab connection portion is long, the component mounting area may be relatively narrow.

The above information disclosed in this Background section is for enhancement of understanding of the background of the present disclosure, and therefore, it may contain information that does not constitute related (or prior) art.

### SUMMARY

The present disclosure provides a protection circuit module, a battery assembly including the protection circuit module, and a method for manufacturing the battery assembly.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to one or more embodiments of the present disclosure, a protection circuit module includes a substrate, a component mounted on the substrate, and a tab connection portion spaced apart from the component on the substrate and to which an electrode tab of a battery cell is connected, wherein a first barrier and a second barrier are formed on the tab connection portion to face each other.

In an embodiment, the first barrier and the second barrier may be parallel to each other in a longitudinal direction.

In one or more embodiments, at least one of the first barrier and the second barrier may be formed by positioning an adhesive member.

In an embodiment, the adhesive member may be at least one of a tape and a coating agent.

In one or more embodiments, the first barrier and the second barrier may be respectively formed at opposite ends of the tab connection portion.

In one or more embodiments, the first barrier and the second barrier may be formed by bending ends of the tab connection portions upwardly.

According to one or more embodiments of the present disclosure, a battery assembly includes a battery cell including an electrode assembly having an electrode tab connected thereto, and a case configured to accommodate the electrode assembly and from which the electrode tab is extended outwardly; and a protection circuit module including a substrate, a component on the substrate, and a tab connection portion spaced from the component on the substrate and to which the electrode tab is connected, wherein a first barrier and a second barrier are on the tab connection portion and face each other.

In one or more embodiments, the tab connection portion may include a positive electrode tab connection portion and a negative electrode tab connection portion, and the component may be on the substrate between the positive electrode tab connection portion and the negative electrode tab connection portion.

In one or more embodiments, the connection between the tab connection portion and the electrode tab may be formed by welding.

In one or more embodiments, the first barrier and the second barrier may be parallel to each other in a longitudinal direction.

In one or more embodiments, at least one of the first barrier or the second barrier may be formed by positioning an adhesive member.

In one or more embodiments, a thickness of each of the first barrier and the second barrier may be less than or equal to a thickness of the electrode tab.

In one or more embodiments, a width of the tab connection portion may be greater than or equal to a sum of widths of the electrode tab, the first barrier, and the second barrier.

In one or more embodiments, the first barrier and the second barrier may be bent upwardly from ends of the tab connection portions.

In one or more embodiments, a thickness of each of the first barrier and the second barrier may be less than or equal to a sum of a thickness of the tab connection portion and a thickness of the electrode tab.

In one or more embodiments, a width of an arrangement surface of the tab connection portion may be greater than or equal to a width of the electrode tab.

In one or more embodiments, the case may include a pouch and a sealing portion, and the electrode tab may extend outwardly from the sealing portion.

According to one or more embodiments of the present disclosure, a method for manufacturing a battery assembly, the method includes providing a battery cell including an electrode assembly having an electrode tab connected thereto and a case configured to accommodate the electrode assembly and from which the electrode tab is extended outwardly, providing a protection circuit module including a substrate, a component on the substrate, and a tab connection portion spaced from the component on the substrate and to which the electrode tab is connected, aligning the battery cell and the protection circuit module so that the electrode tab and the tab connection portion where a barrier is formed face each other, and electrically connecting the battery cell and the protection circuit module by connecting the tab connection portion and the electrode tab, wherein the barrier includes a first barrier and a second barrier on the tab connection portion and face each other.

In one or more embodiments, the providing of the protection circuit module may include positioning the first barrier and the second barrier at opposite ends of the tab connection portion.

In one or more embodiments, the positioning of the first barrier and the second barrier at the opposite ends of the tab connection portion may include forming an extension portion by extending an end of the tab connection portion, and forming the first barrier and the second barrier by bending the extension portion upwardly.

According to one or more embodiments of the present disclosure, the contact between the electrode tab of the battery assembly and the component mounted on the protection circuit module may be prevented, thereby preventing a short circuit during the process of manufacturing the battery assembly.

According to one or more embodiments of the present disclosure, the separation distance between the component mounted on the protection circuit module and the tab connection portion may be reduced, and thus, the component mounting area may be relatively expanded.

According to one or more embodiments of the present disclosure, a short circuit prevention effect may be achieved without a complex process by forming the barrier at the end of the tab connection portion using the tape and/or the coating agent.

According to one or more embodiments of the present disclosure, the productivity of the product including the protection circuit substrate may be improved by reducing the number of processes while achieving a short circuit prevention effect.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 illustrates a configuration of a battery cell according to one or more embodiments of the present disclosure.
FIG. 2 schematically illustrates a battery cell and a protection circuit module of a battery assembly according to one or more embodiments of the present disclosure.
FIG. 3 illustrates a schematic diagram showing one surface of the protection circuit module and the battery cell.
FIG. 4 illustrates a schematic diagram showing one surface of the protection circuit module and the battery cell according to one or more embodiments of the present disclosure.
FIG. 5 illustrates a cross-sectional view taken along the line A-A' of FIG. 4 in a case where the barrier corresponds to a tape.
FIG. 6 illustrates a cross-sectional view taken along the line A-A' of FIG. 4 in a case where the barrier corresponds to a coating agent.
FIG. 7 illustrates a cross-sectional view taken along the line A-A' of FIG. 4 in a case where a barrier is in the bent shape of a tab connection portion.
FIG. 8 illustrates a flowchart showing a method for manufacturing a battery assembly according to one or more embodiments of the present disclosure.
FIGS. 9 and 10 illustrate diagrams for describing a method for manufacturing a barrier according to one or more embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

The terms used in the present specification are for describing embodiments of the present disclosure and are not intended to limit the present disclosure.

In the present disclosure, the sizes and relative sizes of layers and regions shown in the drawings may be exaggerated for clarity of description. That is, the sizes shown in the drawings are only for convenience of understanding and are not limited thereto. In addition, the same reference numerals denote the same elements throughout the specification.

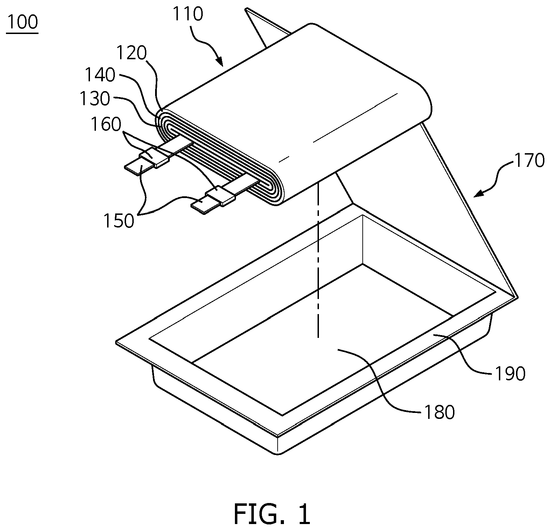

FIG. 1 illustrates a configuration of a battery cell according to one or more embodiments of the present disclosure.

Secondary batteries may be classified into can-type secondary batteries and pouch-type secondary batteries depending on the shape of the case, and the can-type secondary batteries may be classified into prismatic secondary batteries and cylindrical secondary batteries. In a case where the secondary battery is formed in a can-type secondary battery, the battery cell may include a can having an approximately rectangular solid shape or a cylindrical shape and a cap assembly joined to an opening of the can to seal the can. The battery cell may be composed of a battery case and an electrode assembly and an electrolyte accommodated in the battery case.

In a case where the case is a can type, the battery cell and the protection circuit module may be electrically connected through a conductor called a lead or a lead plate. For example, the lead plate may be connected to the battery cell by welding while being attached to the protection circuit module. In the present disclosure, a form in which the protection circuit module is joined to the battery cell as described above may be referred to as a battery assembly.

In addition, as a structure for covering the space between the battery cell and the protection circuit module and the surface of the protection circuit module, a form using a molding resin or a separate external case may be used. The tab connection portion of the protection circuit module may be connected to the lead plate for electrical connection with the battery cell, and the external connection terminal may be connected to an external electronic device to form an electrical path during charging and discharging.

The secondary battery formed as described above is referred to as a battery cell, and the battery cell may be electrically connected to the protection circuit module to form a battery assembly. In the present disclosure, a case where the battery cell is a pouch-type secondary battery or a prismatic secondary battery is described as an example, but the present disclosure is not limited thereto.

As shown in FIG. 1, a battery cell 100 may include an electrode assembly 110, an electrolyte, and a case 170 that accommodates the electrode assembly 110 and the electrolyte in an accommodation portion 180.

The electrode assembly 110 may include a negative electrode plate, which is a first electrode plate 120, a positive electrode plate, which is a second electrode plate 130, and a separator 140 positioned therebetween. In one or more other embodiments, the first electrode plate 120 may be a positive electrode plate and the second electrode plate 130 may be a negative electrode plate. The negative electrode plate may be provided with a negative tab electrically connected to a negative uncoated portion, and the positive electrode plate may be provided with a positive tab electrically connected to a positive uncoated portion. The negative electrode tab and the positive electrode tab may be electrically connected to the outside by being welded to the negative electrode lead and the positive electrode lead of the outer terminal, respectively. Tab films 160 for insulation from the case 170 may be respectively attached to the negative electrode tab and the positive electrode tab. In the present disclosure, the electrode tab is used to refer to a structure that is electrically connected to the electrode assembly through the uncoated portion of the electrode plate and includes the lead to the lead plate.

The case 170 may be a pouch and may include sealing portions 190. The case 170 may be sealed by bringing the sealing portions 190 at the edges into contact with each other while the electrode assembly 110 is accommodated therein. At this time, the sealing may be performed while the tab films 160 are positioned between the sealing portions 190. As shown in FIG. 1, the tab film 160 may be a detachable tab film attached to each of the negative electrode tab and the positive electrode tab.

The sealing portion 190 of the case 170 may be formed of a heat-melting material and may have a structure in which sealing is achieved by bonding heat-melting layers to each other. Because the heat-melting material generally has weak adhesion to metal, the tab film 160 in the form of a thin film may be attached to the electrode tab 150 and fused with the case 170.

As described above, the battery cell 100 may include the case 170 in which the electrode tab 150 connected to the electrode assembly 110 is extended outwardly. The electrode tab 150 exposed to the outside may be connected to the tab connection portion of the protection circuit module. A specific structure of the protection circuit module and the tab connection portion is described below.

The electrode assembly 110 may be formed by winding and/or stacking a stack of the first electrode plate 120, the separator 140, and the second electrode plate 130, which are formed in a thin plate or film shape. In a case where the electrode assembly 110 is a wound stack, the winding axis may be parallel to the longitudinal direction of the case 170. In addition, the electrode assembly 110 may be a stack type rather than a wound type. In the present disclosure, the shape of the electrode assembly 110 is not limited. In one or more embodiments, the electrode assembly 110 may be a Z-stack electrode assembly in which the positive electrode plate and the negative electrode plate are inserted on both sides of the separator folded in a Z-stack. In one or more embodiments, the electrode assembly 110 may be accommodated in the case 170 by stacking one or more electrode assemblies so that long sides thereof are adjacent to each other. In the present disclosure, the number of electrode assemblies 110 is not limited. In the electrode assembly, the first electrode plate 120 may serve as a negative electrode and the second electrode plate 130 may serve as a positive electrode. Of course, the opposite is also possible.

The first electrode plate 120 may be formed by applying a first electrode active material, such as graphite and/or carbon, to a first electrode current collector plate formed of a metal foil, such as copper, a copper alloy, nickel, or a nickel alloy, and may include a first electrode tab (or a first uncoated portion), which is a region where the first electrode active material is not applied. The first electrode tab may serve as a path for a current flow between the first electrode plate 120 and the first current collector. In some examples, the first electrode tab may be formed by cutting the first electrode plate 120 to protrude toward one side in advance in a case of manufacturing the first electrode plate 120, and may further protrude toward one side than the separator 140 without separate cutting.

The second electrode plate 130 may be formed by applying a second electrode active material, such as a transition metal oxide, to a second electrode current collector plate formed of a metal foil, such as aluminum or an aluminum alloy, and may include a second electrode tab (or a second uncoated portion), which is a region where the second electrode active material is not applied. The second electrode tab may be a path for a current flow between the second electrode plate 130 and the second current collector. In some examples, the second electrode tab may be formed by cutting the second electrode plate 130 to protrude toward the other side in advance in a case of manufacturing the second electrode plate 130, and may further protrude toward the other side than the separator 140 without separate cutting.

In some examples, the first electrode tab may be positioned on the left end side surface of the electrode assembly 110, the second electrode tab may be positioned on the right end side surface of the electrode assembly 110, or may be positioned on one surface in the same direction, as shown in FIG. 1. The left side and the right side are for convenience of description based on the battery cell 100 shown in FIG. 1, and the positions thereof may change in a case where the battery cell 100 rotates left and right or up and down.

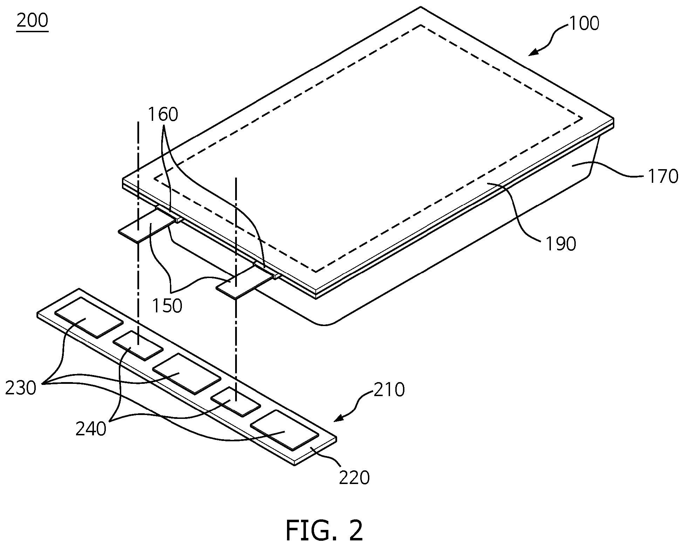

FIG. 2 schematically illustrates a battery cell and a protection circuit module of a battery assembly according to one or more embodiments of the present disclosure. Referring to FIG. 2, a tab connection portion 240 and a component mounting area 230 on a substrate 220 are shown as having an approximately rectangular solid shape, but the present disclosure is not limited thereto.

A protection circuit module 210 according to one or more embodiments of the present disclosure may perform a function of preventing overcharge, overdischarge, and overcurrent of a battery cell 100. For this purpose, the protection circuit module 210 may be electrically connected to an electrode assembly of the battery cell 100 (e.g., the electrode assembly 110 of FIG. 1). The protection circuit module 210 may be electrically connected to the electrode assembly accommodated in a case 170. As shown in FIG. 2, the protection circuit module 210 may be connected to an electrode tab 150 extended outwardly from the case 170. The electrode tab 150 may include a positive electrode tab and a negative electrode tab.

The protection circuit module 210 according to one or more embodiments may include a substrate 220, a component mounted on the substrate 220 on the component mounting area 230, and a tab connection portion 240 spaced (e.g., spaced apart) from the component on the substrate 220 and connected to the electrode tab 150 of the battery cell 100. The component may be mounted on the substrate between the tab connection portions 240 on the component mounting area 230.

The protection circuit module 210 may be formed by mounting a protection module including a switch portion, a control circuit portion, a resistor, a capacitor, etc., a positive temperature coefficient (PTC) thermistor, a connection terminal, an external connection terminal, etc. on the substrate 220 on which a wiring pattern is formed. In the present disclosure, components other than the tab connection portion 240 that can be connection terminals B+ and B- with the battery cell 100 and external connection terminals P+ and P- that are connected to an external load are collectively referred to as components, and the area occupied by the components is defined as the component mounting area 230.

The control circuit portion may detect overcharge, overdischarge, and overcurrent conditions, and the switch portion may turn the power of the circuit on and off. The resistor and the capacitor may protect integrated circuit (IC) chips used as the control circuit portion and the switch portion from abnormal voltage or static electricity, and may remove noise generated in a power supply of the IC chip.

The positive and negative battery connection terminals B+ and B- may be electrically connected to the battery cell 100, and the positive and negative external connection terminals P+ and P- may be connected to the device to form an electrical path during charging and discharging. The tab connection portion 240, which may be the positive and negative battery connection terminals B+ and B-, may be connected to the electrode tab 150 of the battery cell 100 and electrically connected to the electrode assembly 110 connected to the electrode tab 150.

The tab connection portion 240 may be a conductor through which current may flow for electrical connection. For example, the tab connection portion 240 may be made of nickel. The connection between the tab connection portion 240 and the electrode tab 150 may be performed by soldering, resistance welding, laser welding, and/or projection welding methods.

The battery assembly 200 according to one or more embodiments may include the battery cell 100 including the electrode assembly having the electrode tabs 150 connected thereto, the case 170 that accommodates the electrode assembly and from which the electrode tabs 150 is extended outwardly. In one or more embodiments, the battery assembly 200 may include the protection circuit module 210 including the substrate 220, the component mounted on the substrate 220 on the component mounting area 230, and the tab connection portion 240 spaced (spaced apart) from the component on the substrate 220.

The size of the tab connection portion 240 may vary depending on the size of the electrode tab 150 to be connected. For example, the length of one end of the tab connection portion 240 parallel to the short side of the substrate 220 may correspond to the length of the short side of the substrate 220. In this case, the welding connection area of the tab connection portion 240 with the electrode tab 150 becomes longer, and thus, a stable connection may be achieved.

In one or more embodiments, as shown in FIG. 2, the length of one end of the tab connection portion 240 parallel to the short side of the substrate 220 may be shorter than the length of the short side of the substrate 220. In this case, in a case where the substrate 220 on which the tab connection portion 240 is positioned is connected to the battery cell 100 and assembled, the risk of contact with a separate external conductor may be reduced. In addition, in a case where the protection circuit module 210 is mounted on the battery assembly 200, the tab connection portion 240 that is the conductor may not be exposed to the outside, thereby improving reliability regarding safety.

In order to connect the battery cell 100 and the protection circuit module 210 of the battery assembly 200 according to one or more embodiments, for example, the protection circuit module 210 may be inserted while the battery cell 100 is seated in a welding jig. The welding jig may be designed to reflect the tolerances of the sub-materials included in the welding jig. Therefore, the sub-materials may flow within the welding jig by a certain length. In a case of manufacturing the battery assembly 200 by using the welding jig as described above, the electrode tab 150 and/or the protection circuit module 210 of the battery cell 100 may move by a certain length. Accordingly, the electrode tab 150 of the battery cell 100 may come into contact with the component and/or the component mounting area 230 of the protection circuit module 210.

In a case where the polarities of the components and the electrode tabs 150 connected to each other are opposite, a short circuit may occur. For example, a short circuit may occur in a case where the electrode tab is a positive electrode tab and the component connected thereto is a negative electrode, or in a case where the electrode tab is a negative electrode tab and the component connected thereto is a positive electrode.

In a case where the electrode tab 150 of the battery cell 100 is connected to a non-insulated area in the component mounting area 230, a short circuit as described above may occur. A coating agent may be applied onto the component mounting area 230 so as to insulate the mounted components and prevent impact from the outside. A short circuit may occur in a case where the non-insulated area in the component mounting area 230 and the electrode tab 150 of the battery cell 100 have opposite polarities and come into contact with each other.

In the battery assembly 200 used in a small electronic device, the protection circuit module 210 has a small size, and thus, the component mounting area 230 of the substrate 220 may be narrow. To prevent a short circuit, the minimum distance between the component and/or the component mounting area 230 and the tab connection portion 240 may be designed to be relatively long. In the present disclosure, the minimum distance between the component and/or the component mounting area 230 and the tab connection portion 240 may be defined as the separation distance between the tab connection portion 240 and the component.

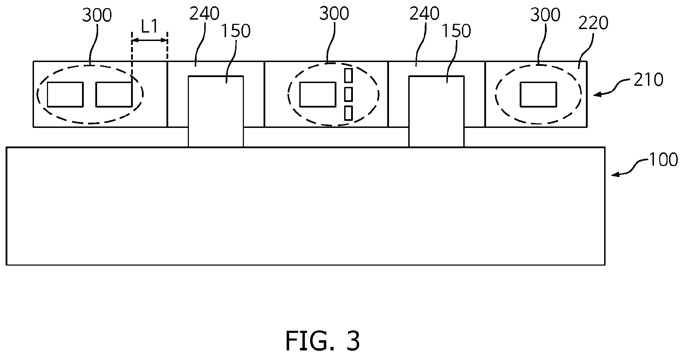

FIG. 3 illustrates a schematic diagram showing one surface of the protection circuit module and the battery cell in one or more embodiments of the present disclosure. Although FIG. 3 illustrates that the upper end of the tab connection portion 240 has a structure that coincides with the upper end of the substrate 220, the present disclosure is not limited thereto, and the upper end of the tab connection portion 240 may be variable depending on the size of the electrode tab 150 to be connected. In addition, the number, shape, arrangement, and/or configuration of the components 300 are arbitrarily shown and the present disclosure is not limited thereto.

The substrate 220 according to one or more embodiments may support the configuration of the protection circuit module 210. The substrate 220 may include various electric circuits and components 300 that may control the operation of the battery cell 100. The components 300 mounted on the substrate 220 may communicate with external control devices by wire or wirelessly. The substrate 220 may be a printed circuit board (PCB) or a flexible printed circuit board (FPCB). The substrate 220 may be made of one or more of FR-1, FR-4, CEM-1, CEM-3, TEFLON, ceramic, and/or metal. The substrate 220 may include a copper layer that allows electrical signals to be transmitted between the components 300. The copper layer may be formed over all or part of the substrate 220. Electrical connections for the operations of the components 300 may be made through the copper layer.

The components 300 according to one or more embodiments may be mounted in the component mounting area (e.g., the component mounting area 230 of FIG. 2) on the substrate 220. The components 300 may be mounted by being spaced (e.g., spaced apart) from each other. The positions and arrangements of the components 300 may vary beyond those shown in FIG. 3 and the present disclosure is not limited thereto. The components 300 may be made of insulating material or may be positive or negative.

The components 300 according to one or more embodiments may be mounted on the substrate 220 with different heights. The components 300 may be mounted on the substrate 220 at different heights according to the specification (e.g., dimensions and/or characteristics) of each of the components 300. In one or more embodiments, the heights of the tab connection portion 240, the external connection terminal, and the components 300 may be all different from each other. For example, the height at which the charge/discharge switching element is mounted from among the components 300 may be higher than the height of the tab connection portion 240.

Referring to FIG. 3, in a case where one surface of the tab connection portion 240 according to one or more embodiments is approximately flat, the electrode tab 150 of the battery cell 100 may easily come off from one surface of the tab connection portion 240 during the process of manufacturing the battery assembly (e.g., the battery assembly 200 of FIG. 2), and thus, a short circuit may occur due to the contact with the components 300 and/or the component mounting area (e.g., the component mounting area 230 of FIG. 2). Accordingly, a separation distance L1 between the tab connection portion 240 of the protection circuit module 210 and the components 300 according to one or more embodiments may be designed to be relatively long. Accordingly, the component mounting area 230 may be narrow.

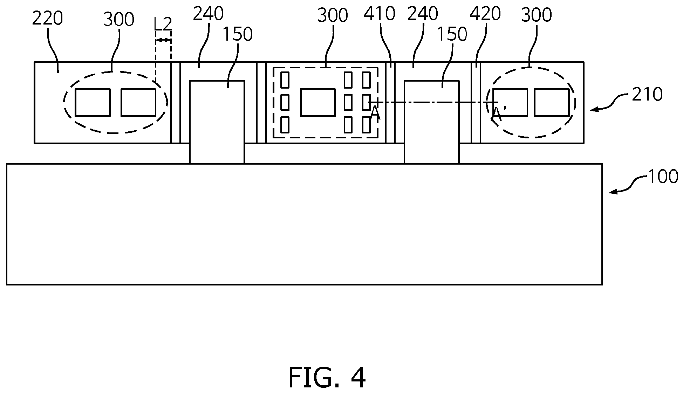

The tab connection portion 240 of the protection circuit module 210 according to one or more embodiments may include a first barrier and a second barrier formed on the tab connection portion 240 to face each other so as to expand the component mounting area and increase the space utilization of the substrate by reducing the separation distance L1 between the tab connection portion 240 and the component 300. The location and structure of the first and second barriers are described below with reference to FIGS. 4 - 10.

FIG. 4 illustrates a schematic diagram showing one surface of the protection circuit module and the battery cell according to one or more embodiments of the present disclosure. Although FIG. 4 illustrates that the upper end of the tab connection portion 240 has a structure that coincides with the upper end of the substrate 220, the present disclosure is not limited thereto, and the upper end of the tab connection portion 240 may be variable depending on the size of the electrode tab 150 to be connected. In addition, the number, shape, arrangement, and/or configuration of the components 300 shown in FIG. 4 are arbitrarily shown and the present disclosure is not limited thereto.

Hereinafter, the structure of the tab connection portion 240 is described, but this may also be applied to an external connection terminal connected to an external load. The structure of the tab connection portion 240 described below may also be applied to the external connection terminal.

The protection circuit module 210 according to one or more embodiments may include a substrate 220, a component 300 mounted on the substrate 220, and a tab connection portion 240 spaced (e.g., spaced apart) from the component 300 on the substrate 220 and connected to the electrode tab 150. In one or more embodiments, a first barrier 410 and a second barrier 420 may be formed on the tab connection portion 240 to face each other. In one or more embodiments, the first barrier 410 and the second barrier 420 may be long barrier members formed in a direction approximately parallel to the direction in which the electrode tab 150 is inserted.

A plurality of components 300 may be mounted in various arrangements at various locations on the substrate 220 so as to implement the function of the protection circuit module 210. Accordingly, the first barrier 410 and the second barrier 420 may be formed in various shapes and arrangements at various locations.

Referring to FIG. 4, the first barrier 410 and the second barrier 420 of the protection circuit module 210 according to one or more embodiments may be formed at opposite ends of one surface of the tab connection portion 240. In the present disclosure, the opposite ends of the tab connection portion 240 refer to opposite ends that are approximately parallel to the direction in which the electrode tab 150 is inserted. The first barrier 410 and the second barrier 420 of the protection circuit module 210 according to one or more embodiments may be formed at only one of the opposite ends of one surface of the tab connection portion 240.

Referring to FIG. 4, the first barrier 410 and the second barrier 420 of the protection circuit module 210 according to one or more embodiments may be parallel to each other in the longitudinal direction. In one or more embodiments, the first barrier 410 and the second barrier 420 may also be parallel to the ends of the electrode tabs 150 of the battery cells 100 connected to the tab connection portion 240. The lengths of the first barrier 410 and the second barrier 420 may be equal to the lengths of the opposite ends of the tab connection portion 240. In this case, during the process of manufacturing the battery assembly, for example, the possibility of contact between the electrode tab 150 and the component 300 is reduced by the first barrier 410 and the second barrier 420 during the process of inserting the protection circuit module 210 into the battery cell 100 mounted on the welding jig, thereby preventing a short circuit more effectively.

The interval between the first barrier 410 and the second barrier 420 of the protection circuit module 210 according to one or more embodiments may be changed. For example, the interval between the first barrier 410 and the second barrier 420 may become narrower depending on the protruding direction of the electrode tab 150. In one or more embodiments, the first barrier 410 and the second barrier 420 may be formed to converge as the first barrier 410 and the second barrier 420 approach the long side of the substrate 220 (e.g., the portion farther away from the battery cell 100). In this case, the shape of the electrode tab 150 may be changed so that the electrode tab 150 may be inserted between the first barrier 410 and the second barrier 420. For example, the electrode tab 150 may be formed in an approximately triangular shape.

As shown in FIG. 4, the first barrier 410 and the second barrier 420 may be formed at both the positive electrode tab connection portion 240 and the negative electrode tab connection portion 240. In one or more embodiments, the first barrier 410 and the second barrier 420 may be formed at only one of the positive electrode tab connection portion 240 or the negative electrode tab connection portion 240. In one or more embodiments, the first barrier 410 and the second barrier 420 may be formed at only one of the opposite ends of the positive electrode tab connection portion 240 or the negative electrode tab connection portion 240.

The risk of a short circuit due to contact between the electrode tab 150 and the component 300 may be reduced by the first barrier 410 and the second barrier 420 according to one or more embodiments. Accordingly, the component 300 may be mounted closer to the tab connection portion 240 in the protection circuit module 210 described with reference to FIG. 3.

Accordingly, the separation distance L2 between the tab connection portion 240 of the protection circuit module 210 and the component 300 according to one or more embodiments may be smaller than the separation distance (L1 of FIG. 3) between the tab connection portion 240 of the protection circuit module 210 and the component 300 shown in FIG. 3.

Accordingly, the number of components 300 shown in FIG. 4 or the area occupied by the components 300 may be greater than the number of components 300 shown in FIG. 3 or the area occupied by the components 300. In one or more embodiments, the component mounting area on the substrate 220 of FIG. 4 (e.g., the component mounting area 230 of FIG. 2) may be larger than the component mounting area on the substrate 220 of FIG. 3. For example, referring to FIG. 4, the number of components mounted in the portion between the positive electrode tab connection portion 240 and the negative electrode tab connection portion 240 may be greater than the number of components mounted in the corresponding portion of FIG. 3.

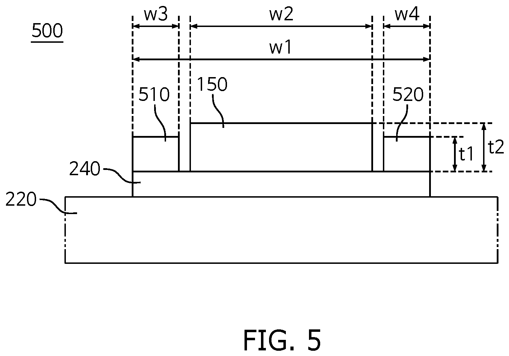

FIG. 5 illustrates a cross-sectional view taken along the line A-A' of FIG. 4 in a case where the barrier corresponds to a tape. Referring to FIG. 5, the tab connection portion 240 may be positioned on the substrate 220 of the protection circuit module, and the electrode tab 150, the first barrier 510, and the second barrier 520 may be positioned on the tab connection portion 240. Descriptions redundant with those provided above are omitted.

In the protection circuit module according to one or more embodiments, at least one of the first barrier 510 and the second barrier 520 may be formed by disposing an adhesive member. The adhesive member may include an insulating material. The adhesive member may be a member that has adhesiveness on at least one surface. For example, the adhesive member may be a tape or a coating agent. The tape may be, for example, a polyimide (PI) tape and/or a polyethylene terephthalate (PET) tape. The adhesive side of the tape or the coating agent may be attached to one surface of the tab connection portion 240. Forming the barrier at the end of the tab connection portion 240 with the tape or the coating agent may prevent a short circuit (e.g., may achieve a short circuit prevention effect) without a complex process.

Referring to FIG. 5, in a case where the first barrier 510 and the second barrier 520 correspond to the tapes, the first barrier 510 and the second barrier 520 may have an approximately rectangular solid shape, but the present disclosure is not limited thereto. In the present disclosure, the thickness and width refer to results measured from the outermost point.

Referring to FIG. 5, in the battery assembly according to one or more embodiments, the thickness t1 of the first barrier 510 and the second barrier 520 may be less than or equal to the thickness t2 of the electrode tab 150. This may be to prevent the overall thickness of the protection circuit module from increasing due to the first barrier 510 and the second barrier 520.

Even in a case where the thickness t1 of the first barrier 510 and the second barrier 520 is less than the thickness t2 of the electrode tab 150, left-right movement between the battery cell and the protection circuit module may be prevented during the manufacturing of the battery assembly. However, in a case where the thickness t1 of the first barrier 510 and the second barrier 520 is less than half the thickness t2 of the electrode tab 150, the electrode tab 150 may move horizontally and go over the first barrier 510 or the second barrier 520 before the electrode tab 150 is fixed to the tab connection portion 240 by welding and/or the like. Therefore, the thickness t1 of the first barrier 510 and the second barrier 520 may be greater than half the thickness t2 of the electrode tab 150. Due to this, the electrode tab 150 may be prevented from coming into contact with the component (e.g., the component 300 of FIG. 4) on the substrate 220 by the first barrier 510 and the second barrier 520.

In the battery assembly according to one or more embodiments, the width w1 of the tab connection portion 240 may be greater than or equal to the sum total w2+w3+w4 of the widths of the electrode tab 150, the first barrier 510, and the second barrier 520. In this case, the electrode tab 150 may be spaced (e.g., spaced apart) from the first barrier 510 and the second barrier 520, or may be in contact with at least one of the first barrier 510 or the second barrier 520. In a case where the width w1 of the tab connection portion 240 is equal to the total width w2+w3+w4 of the lengths of the electrode tab 150, the first barrier 510, and the second barrier 520, the electrode tab 150 may be in contact with the first barrier 510 and the second barrier 520.

In one or more embodiments, as shown in FIG. 5, the electrode tab 150 may be spaced (e.g., spaced apart) from the barrier between the first barrier 510 and the second barrier 520. As the width of the electrode tab 150 increases, the width w3 of the first barrier 510 and the width w4 of the second barrier 520 may relatively decrease.

In one or more embodiments, the first barrier 510 and the second barrier 520 may be positioned at the opposite ends of the tab connection portion 240 or inside the opposite ends of the tab connection portion 240. In one or more embodiments, in a case where the first barrier 510 and the second barrier 520 correspond to the tapes, a portion of the tape may protrude outside the tab connection portion 240.

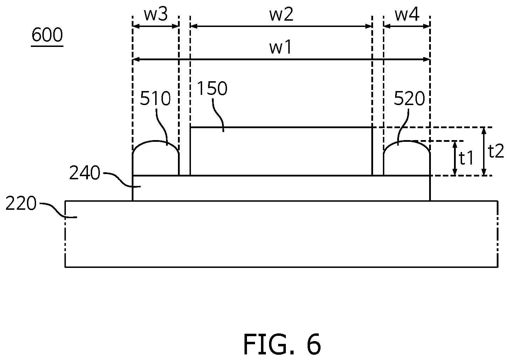

FIG. 6 illustrates a cross-sectional view taken along the line A-A' of FIG. 4 in a case where the barrier corresponds to a coating agent. Descriptions redundant with those provided above are omitted.

In one or more embodiments, the first barrier 510 and the second barrier 520 may be coating agents. The coating agent may be an underfill coating material. The underfill coating material may be an insulating resin. The coating agent including the underfill coating material has excellent spreadability, and thus, the thickness t1 of the applied coating agent may be formed uniformly.

In one or more embodiments, the coating agent may be applied onto the opposite ends of the tab connection portion 240 and then dried to form a shape having a constant thickness, as shown in FIG. 6. The constant shape may be, for example, a shape with a curved upper surface.

In the battery assembly according to one or more embodiments, the thickness t1 of the first barrier 510 and the second barrier 520 may be less than or equal to the thickness t2 of the electrode tab 150. This may be to prevent the overall thickness of the protection circuit module 210 from increasing due to the first barrier 510 and the second barrier 520.

In addition, even in a case where the thickness t1 of the first barrier 510 and the second barrier 520 is less than the thickness t2 of the electrode tab 150, the left-right movement between the battery cell 100 and the protection circuit module 210 may be prevented during the manufacturing of the battery assembly 200. However, in a case where the thickness t1 of the first barrier 510 and the second barrier 520 is less than half the thickness t2 of the electrode tab 150, the electrode tab 150 may move horizontally and go over the first barrier 510 or the second barrier 520 before the electrode tab 150 is fixed to the tab connection portion 240 by welding and/or the like. Therefore, the discharge amount or the loading amount of the coating agent may be adjusted so that the thickness t1 of the first barrier 510 and the second barrier 520 is greater than half the thickness t2 of the electrode tab 150.

In one or more embodiments, the width w1 of the tab connection portion 240 may be greater than or equal to the sum total w2+w3+w4 of the widths of the electrode tab 150, the first barrier 510, and the second barrier 520. The description related thereto is the same as those described with reference to FIG. 5 and is thus omitted.

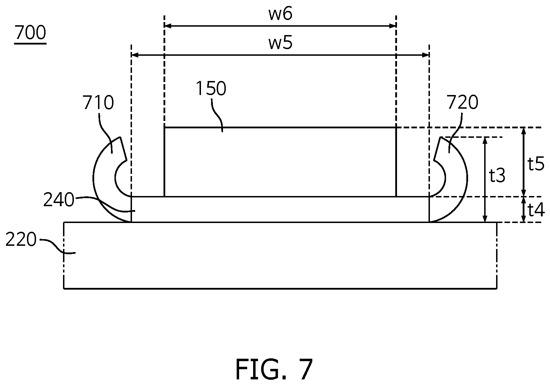

FIG. 7 illustrates a cross-sectional view taken along the line A-A' of FIG. 4 in a case where a barrier is in the bent shape of a tab connection portion.

In one or more embodiments, at least one of a first barrier 710 or a second barrier 720 may be formed such that the end of the tab connection portion 240 is bent upward. The first barrier 710 and the second barrier 720 may be formed by bending extension portions extending from the opposite ends of the tab connection portion 240 vertically or upwardly. The extension portions extending from the opposite ends of the tab connection portion 240 may be made of the same material as the tab connection portion 240. The portion of the extension portion bent upward may form the thickness t3 of the first barrier 710 and the second barrier 720. At this time, the straight length of the extension portion may not be equal to the thickness t3 of the first barrier 710 and the second barrier 720 due to the bent shape of the barrier.

The thickness t4 of the tab connection portion 240 may be equal to the thickness of the extension portion, and the thickness t4 of the extension portion and the tab connection portion 240 may be thin enough to be bendable.

Referring to FIG. 7, in the battery assembly 200 according to one or more embodiments, the thickness t3 of the first barrier 710 and the second barrier 720 may be less than or equal to the sum of the thickness t4 of the tab connection portion 240 and the thickness t5 of the electrode tab 150. This may be to prevent the overall thickness of the protection circuit module from increasing due to the first barrier 710 and the second barrier 720.

In addition, even in a case where the thickness t3 of the first barrier 710 and the second barrier 720 is less than the sum t4+t5 of the thickness t4 of the tab connection portion 240 and the thickness t5 of the electrode tab 150, the left-right movement between the battery cell 100 and the protection circuit module 210 may be prevented during the manufacturing of the battery assembly 200. However, in a case where the thickness t3-t4 of the portion excluding the thickness t4 of the tab connection portion 240 from the thickness t3 of the first barrier 710 or the second barrier 720 is less than half the thickness t5 of the electrode tab 150, the electrode tab 150 may move horizontally and go over the first barrier 710 or the second barrier 720 before the electrode tab 150 is fixed to the tab connection portion 240 by welding and/or the like. Accordingly, the thickness t3-t4 of the portion excluding the thickness t4 of the tab connection portion 240 from the thickness t3 of the first barrier 710 or the second barrier 720 may be greater than half the thickness t5 of the electrode tab 150. Due to this, the electrode tab 150 may be prevented from coming into contact with the component (e.g., the component 300 of FIG. 4) on the substrate 220 by the first barrier 710 and the second barrier 720.

The barrier may be formed by bending the extension portion upwardly, so that the thickness t3-t4 of the portion excluding the thickness t4 of the tab connection portion 240 from the thickness t3 of the first barrier 710 or the second barrier 720 is greater than half the thickness t5 of the electrode tab 150.

Referring to FIG. 7, the arrangement surface of the tab connection portion 240 may refer to an area of the tab connection portion 240 where the electrode tab 150 may be connected or an area where the tab connection portion 240 is mounted on the substrate 220. In one or more embodiments, the width w5 of the arrangement surface of the tab connection portion 240 may be greater than or equal to the width w6 of the electrode tab 150. In this case, in a case of manufacturing the battery assembly, the electrode tab 150 may move horizontally within the arrangement surface of the tab connection portion 240.

The position at which the electrode tab 150 is fixed to the tab connection portion 240 by welding and/or the like may be a position that is spaced (e.g., spaced apart) from the first barrier 710 and the second barrier 720 within the arrangement surface. In one or more embodiments, the electrode tab 150 may be electrically connected to the center of the arrangement surface of the tab connection portion 240 by welding and/or the like.

In one or more embodiments, one of the first barrier and the second barrier formed at the opposite ends of the tab connection portion 240 may correspond to an adhesive member, and the other thereof may be formed by bending the end of the tab connection portion 240 upwardly, as shown in FIG. 7. The combination of the first barrier 710 and the second barrier 720 may correspond to various combinations of barriers according to various embodiments of the present disclosure.

According to one or more embodiments, even in the case of the external connection terminal positioned on the substrate 220 of the protection circuit module (210 of FIG. 4), the first barriers 510 and 710 and the second barriers 520 and 720 of the present disclosure may be formed as described above.

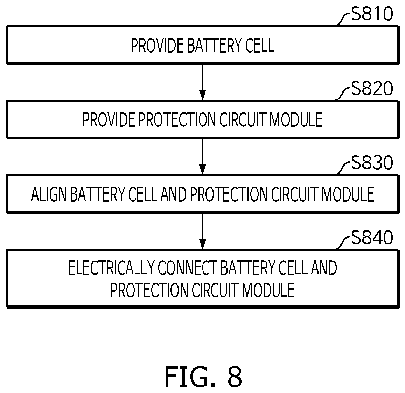

FIG. 8 illustrates a flowchart showing a method for manufacturing a battery assembly according to one or more embodiments of the present disclosure. Descriptions redundant with those provided above are omitted.

A method for manufacturing a battery assembly according to one or more embodiments of the present disclosure may include providing a battery cell including an electrode assembly having an electrode tab connected thereto and a case configured to accommodate the electrode assembly and from which the electrode tab is extended outwardly (S810).

Then, the method may include providing a protection circuit module including a substrate, a component mounted on the substrate, and a tab connection portion spaced (e.g., spaced apart) from the component on the substrate and to which the electrode tab is connected (S820). A first barrier and a second barrier may be formed on the tab connection portion to face each other.

Then, the method may include aligning the battery cell and the protection circuit module so that the electrode tab and the tab connection portion where the barrier is formed face each other (S830). As described above, the alignment of the battery cell and the protection circuit module may be achieved using a welding jig and/or the like. At this time, the electrode tab of the battery cell may be inserted between the first barrier and the second barrier of the tab connection portion.

Then, the method may include electrically connecting the battery cell and the protection circuit module by connecting the tab connection portion and the electrode tab by welding and/or the like (S840).

In one or more embodiments, the operation S820 of providing the protection circuit module may include positioning the first barrier and the second barrier at opposite ends of one surface of the tab connection portion. For example, in a case where the first barrier and/or the second barrier correspond to tapes, the tapes having a specific size may be attached to the opposite ends of one surface of the tab connection portion. As another example, in a case where the first barrier and/or the second barrier correspond to coating agents, a specific discharge amount or loading amount of the coating agent may be applied to the opposite ends of one surface of the tab connection and then dried.

The flowchart of FIG. 8 and the above description are only examples of the present disclosure, and the scope of the present disclosure is not limited to the flowchart of FIG. 8 and the above description. For example, one or more steps in the flowchart and the above description may be added/changed/deleted, the order of one or more steps may be changed, and one or more steps may be performed concurrently (e.g., simultaneously).

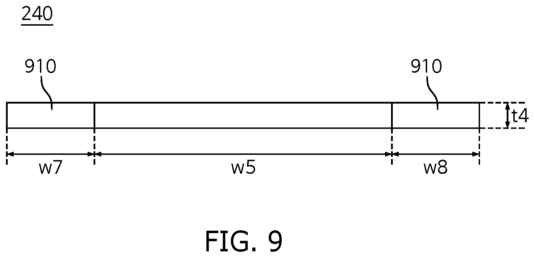

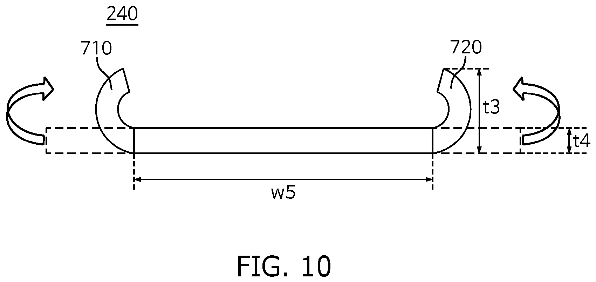

FIGS. 9 and 10 illustrate diagrams for describing a method for manufacturing a barrier according to one or more embodiments of the present disclosure. FIGS. 9 and 10 illustrate diagrams for describing a method for manufacturing the barrier described with reference to FIG. 7. Descriptions redundant with those provided above are omitted.

Referring to FIGS. 9 and 10, the operation of positioning the first barrier 710 and the second barrier 720 at the opposite ends of one surface of the tab connection portion 240 may include forming an extension portion 910 by extending the end of the tab connection portion 240, and forming the first barrier 710 and the second barrier 720 by bending the extension portion 910 upwardly.

According to one or more embodiments, the length of the tab connection portion 240 may be extended to form the extension portion 910 using a member of the same material as the tab connection portion 240. The widths w7 and w8 of the extension portion 910 may be different from the thickness t3 of the first barrier and/or the second barrier wall 710 and 720, as described above with reference to FIG. 7. In addition, the width w7 and w8 of the extension portion 910 may be manufactured so that the thickness t3 of the first barrier 710 or the second barrier 720 after the extension portion 910 is bent upwardly may be less than or equal to the sum of the thickness of the electrode tab (e.g., the electrode tab 150 of FIG. 7) and the thickness t4 of the tab connection portion 240. In the area where the bending occurs, for example, the bending may be performed at the boundary between the portion corresponding to the width w5 of the arrangement surface of the tab connection portion 240 and the extension portion 910. The tab connection portion 240 manufactured as described above may be positioned on the substrate (e.g., the substrate 220 of FIG. 7).

Although the present disclosure has been described above with respect to embodiments thereof, the present disclosure is not limited thereto. Various modifications and variations can be made thereto by those skilled in the art within the scope of the appended claims.

**DESCRIPTION OF SOME REFERENCE SYMBOLS**

| | | | |
|---|---|---|---|
| 100: | battery cell | 110: | electrode assembly |
| 120: | first electrode plate | 130: | second electrode plate |
| 140: | separator | 150: | electrode tab |
| 160: | tab film | 170: | case |
| 180: | accommodation portion | 190: | sealing portion |
| 200: | battery assembly | 210: | protection circuit module |
| 220: | substrate | 230: | component mounting area |
| 240: | tab connection portion | 300: | component |
| 410, 510, 710: | first barrier | 420, 520, 720: | second barrier |
| 500, 600, 700: | example of A-A' cross-section | | |
| 910: | extension portion | | |
| L1, L2: | separation distance between tab connection portion and component | | |
| t1, t3: | thickness of barrier | t2, t5: | thickness of electrode tab |
| t4: | thickness of tab connection portion | | |
| w1: | width of tab connection portion | w2, w6: | width of electrode tab |
| w3: | width of first barrier | w4: | width of second barrier |
| w5: | width of arrangement surface of tab connection portion | | |
| w7, w8: | width of extension portion | | |

## Claims

1. A protection circuit module (210) comprising:
a substrate (220);
a component (300) on the substrate (220); and
a tab connection portion (240) spaced from the component (300) on the substrate (220) and to which an electrode tab (150) of a battery cell (100) is connected,
wherein a first barrier (410, 510, 710) and a second barrier (420, 520, 720) are on the tab connection portion (240) and face each other.

2. The protection circuit module (210) as claimed in claim 1, wherein the first barrier (410, 510, 710) and the second barrier (420, 520, 720) are parallel to each other in a longitudinal direction.

3. The protection circuit module (210) as claimed in claim 1 or claim 2, wherein at least one of the first barrier (410, 510) or the second barrier (420, 520) is formed by positioning an adhesive member.

4. The protection circuit module (210) as claimed in claim 3, wherein the adhesive member is at least one of a tape or a coating agent.

5. The protection circuit module (210) as claimed in any one of claims 1 to 4, wherein the first barrier (410, 510, 710) and the second barrier (420, 520, 720) are respectively located at opposite ends of the tab connection portion (240).

6. The protection circuit module (210) as claimed in any one of claims 1 to 5, wherein the first barrier (710) and the second barrier (720) are bent upwardly from ends of the tab connection portion (240).

7. A battery assembly (200) comprising:
a battery cell (100) comprising an electrode assembly (110) having an electrode tab (150) connected thereto, and a case (170) configured to accommodate the electrode assembly (110) and from which the electrode tab (150) is extended outwardly; and
a protection circuit module (210) according to any one of claims 1 to 6.

8. The battery assembly (200) as claimed in claim 7, wherein the tab connection portion (240) comprises a positive electrode tab connection portion and a negative electrode tab connection portion, and
wherein the component (300) is on the substrate (220) between the positive electrode tab connection portion and the negative electrode tab connection portion.

9. The battery assembly (200) as claimed in claim 7 or claim 8, wherein the connection between the tab connection portion (240) and the electrode tab (150) is formed by welding.

10. The battery assembly (200) as claimed in any one of claims 7 to 9, wherein a thickness (t1, t3) of each of the first barrier (410, 510, 710) and the second barrier (420, 520, 720) is less than or equal to a thickness (t2, t5) of the electrode tab.

11. The battery assembly (200) as claimed in any one of claims 7 to 10, wherein a width (w1) of the tab connection portion (240) is greater than or equal to a sum of widths (w2, w3, w4) of the electrode tab (150), the first barrier (410, 510, 710), and the second barrier (420, 520, 720).

12. The battery assembly (200) as claimed in any one of claims 7 to 11, wherein a thickness (t1, t3) of each of the first barrier (410, 510, 710) and the second barrier (420, 520, 720) is less than or equal to a sum of a thickness (t4) of the tab connection portion (240) and a thickness (t2, t5) of the electrode tab (150).

13. The battery assembly 200 as claimed in any one of claims 7 to 12, wherein a width (w5) of an arrangement surface of the tab connection portion (240) is greater than or equal to a width (w2, w6) of the electrode tab (150).

14. The battery assembly 200 as claimed in any one of claims 7 to 13, wherein the case (170) comprises a pouch and a sealing portion (190), and
wherein the electrode tab (150) extends outwardly from the sealing portion (190).

15. A method for manufacturing a battery assembly, the method comprising:
providing a battery cell (100) comprising an electrode assembly (110) having an electrode tab (150) connected thereto and a case (170) configured to accommodate the electrode assembly (110) and from which the electrode tab (150) is extended outwardly;
providing a protection circuit module (210) comprising a substrate (220), a component (300) on the substrate (220), and a tab connection portion (240) spaced from the component (300) on the substrate (220) and to which the electrode tab (150) is connected;
aligning the battery cell (100) and the protection circuit module (210) so that the electrode tab (150) and the tab connection portion (240) where a barrier is formed face each other; and
electrically connecting the battery cell (100) and the protection circuit module (210) by connecting the tab connection portion (240) and the electrode tab (150),
wherein the barrier comprises a first barrier (410, 510, 710) and a second barrier (420, 520, 720) on the tab connection portion (240) and face each other.
